# EUROPEAN PATENT SPECIFICATION

(11) **EP 2 581 281 B1**
(45) Date of publication and mention of the grant of the patent: **27.02.2019**
(21) Application number: 11184969.1
(22) Date of filing: 13.10.2011
(51) Int. Cl.: B60T 17/22, B60T 8/34

(54) **Method of bleeding a hydraulic braking system**
Verfahren zum Entlüften eines hydraulischen Bremssystems
Procédé de purge de système de freinage hydraulique

(43) Date of publication of application: 17.04.2013
(73) Proprietor: Ford Global Technologies, LLC, Dearborn, MI 48126 (US)
(72) Inventor: Jones, Kim Stephen, Chelmsford, Essex CM1 6YT (GB); Cookson, Andrew, Wickford, Essex SS11 7DF (GB)
(74) Representative: Illing, Rolf

(56) References cited:
- EP-A2- 0 323 889
- US-A1- 2006 192 426

## Description

The present invention relates to a method of bleeding a hydraulic braking system, in particular, to a method of bleeding a hydraulic braking system of a vehicle.

Document US 2006/192426 A1 shows a method of bleeding a hydraulic braking system according to the preamble of claim 1, a part from the presence of an electronic stability control system.

Document EP 0 323 889 A2 shows the use of ABS pumps and valves in a process of bleeding a hydraulic braking system.

Following the opening of any hydraulic connection in the braking system or during a brake fluid replacement, e.g. every two years, the affected portion of the braking system must be bled to remove any air that may have entered the system. This is currently accomplished by either a pressure bleeding system that forces fluid through the affected brake circuit or a manual system where a technician operates the brake pedal to move fluid through the braking system.

The pressure bleeding system injects fluid under pressure into the braking system. It is only possible to bleed one braking circuit at a time. An operator has to look for the fluid running clear of air bubbles. When it is judged that the brake fluid is free of air bubbles the bleeding process is stopped.

The manual bleeding is accomplished by one operator forcing brake fluid through the braking system by operating the brake pedal through its full travel. A second operator giving instructions from underneath a vehicle looks for the fluid, e.g., running out of an opened bleeder screw at a brake calliper or brake cylinder. When there are no air bubbles in the fluid the operator inside the vehicle holds the brake pedal in its fully applied position while the second operator underneath the vehicle closes the bleeder screw on the brake.

There is still a third known method of bleeding a hydraulic braking system which is not a recommended practice but used extensively: applied air pressure. An air line is applied to the bleeder screw creating a venturi effect that pulls brake fluid through the brake circuit from the brake fluid reservoir. When there are no air bubbles in the brake fluid the operator switches off the pressure and tightens the bleeder screw.

All aforementioned systems are reliant on at least an operator and in some cases will not remove all of the air contained in the system.

It is therefore an object of the present invention to provide an improved air bleeding method for a hydraulic braking system by means of which air can be bled efficiently from the braking system. It is a further object of the present invention to reduce the operator's interventions necessary to carry out the bleeding process in order to make the bleeding of the braking system more reliable.

It is to be understood that the features disclosed in the following detailed description may be combined in any technically reasonable and practical way and disclose further embodiments of the present invention.

According to the present invention there is provided a method of bleeding a hydraulic braking system, comprising at least a hydraulic pump which, at its suction side, is in fluid conducting communication with a brake fluid reservoir and, at its pressure side, is in fluid conducting communication with at least a brake cylinder, wherein at least a valve for opening and closing the fluid conducting communication is provided between the hydraulic pump and each brake cylinder, including at least the following steps:
- providing brake fluid to the brake fluid reservoir while carrying out all subsequent steps,
- opening a bleeder screw on at least one brake cylinder,
- starting the hydraulic pump,
- opening and closing of at least a valve,
- stopping the hydraulic pump, and
- closing the bleeder screw,
wherein the steps of starting and stopping the hydraulic pump and the steps of opening and closing the valve(s) are carried out by an electronic stability control system.

The electronic stability control (ESC) system of a vehicle has the capability to draw brake fluid from the brake fluid reservoir and apply wheel individual brakes during an ESC or traction control event. According to the present invention this functionality is used to draw fresh brake fluid from the brake fluid reservoir and out of an open bleeder screw at the brake cylinder or brake calliper ensuring that all air is removed from the braking system. This process only requires one operator and a minimum of intervention since a visual control, i.e. looking for the presence of air bubbles in the brake fluid, is not required. Utilizing the ESC system for carrying out the bleeding of the braking system facilitates the bleeding process to be carried out efficiently since no external equipment, such as external pumps or air lines, has to be additionally provided or mounted to the braking system.

According to a preferred embodiment the brake fluid in the brake fluid reservoir is pressurized with a pressure preferably in the range of approximately 1 bar to approximately 2 bar of primary pressure. Thus, the bleeding process can be carried out even more rapidly while always ensuring a sufficient amount of brake fluid in the brake fluid reservoir. It is to be understood that a conventional brake system pressure filler may be used to provide the brake fluid to the fluid reservoir and pressurize the brake fluid in the reservoir.

In order for the bleeding process to be even more efficiently carried out the steps of starting and stopping the hydraulic pump and the steps of opening and closing the valve(s) are automatically initiated by means of a diagnostic program according to another preferred embodiment. Preferably the diagnostic program communicates with the electronic stability control system via an appropriate communication protocol such as CAN (controller area network), SCP or ISO 9141 etc. The diagnostic program or tool may, for example, take an appropriate decision which valves of the braking system to operate, i.e. to open and to close, during the bleeding process depending on the replaced and/or opened parts of the braking system. The diagnostic tool may present the operator a parts list from which he chooses the renewed brake parts and, subsequently, the diagnostic tool only operates the valves associated with the affected portion of the braking system that has to be bled.

For example, if a brake fluid change is to occur or the tandem master cylinder, the ABS ECU (anti-lock braking system electronic control unit), the ABS HCU (anti-lock braking system hydraulic control unit), or the brake tubes have been renewed, the front left, front right, rear left, and rear right brake circuits of a vehicle have to be bled. If only the front left calliper or the front left brake hose have been renewed, only the front left brake circuit has to be bled and therefore only the valves associated with the front left brake circuit might be operated by the diagnostic tool. If only the front right calliper or the front right brake hose have been renewed, only the front right brake circuit has to be bled and therefore only the valves associated with the front right brake circuit might be operated by the diagnostic tool. If only the rear left calliper or the rear left brake hose have been renewed, only the rear left brake circuit has to be bled and therefore only the valves associated with the rear left brake circuit might be operated by the diagnostic tool. If only the rear right calliper or the rear right brake hose have been renewed, only the rear right brake circuit has to be bled and therefore only the valves associated with the rear right brake circuit might be operated by the diagnostic tool. It is to be understood that in a very simple approach of operating the valves of the braking system the diagnostic program can operate all the valves of the braking system irrespective of the replaced and/or opened parts of the braking system. Thus, the information which parts have been replaced and/or opened might be used by the diagnostic program only to instruct the operator which bleeding screw to open and close when and at which brake calliper or brake cylinder.

In order to reach hardly to bleed portions of the braking system it may be appropriate to sequentially open and close all valves of the braking system during the steps of opening and closing the valve(s), i.e. only one valve of the braking system is opened and closed before the next valve of the braking system is opened and closed etc. This facilitates that fresh brake fluid is drawn through every portion of the braking system and, thus, ensures that all air is removed from the braking system.

According to yet another embodiment of the present invention the steps of opening and closing the valve(s) comprise opening and closing all valves of the braking system at the same time. Thus, the method of bleeding the hydraulic braking system can be carried out in a very quick manner while still ensuring that fresh brake fluid is drawn through every portion of the braking system and all air is removed therefrom.

According to yet another embodiment of the present invention the steps of opening and closing the valve(s) are carried out multiple times in rapid succession, thus creating pressure pulsations in the braking system to eliminate air bubbles. The same effect is achieved when the pump is repeatedly started and stopped in rapid succession.

Since an operator's intervention carrying out the bleeding method according to the present invention is reduced to a minimum and visual control, i.e. looking for the presence of air bubbles in the brake fluid, is no longer required, according to the present invention it is even possible to bleed more than one brake circuit at a time. Hence, if the hydraulic braking system comprises at least two brake cylinders which are associated with two different brake circuits of the braking system the steps of opening and closing the bleeder screw comprise opening and closing the bleeder screw on the two brake cylinders associated with the two different brake circuits at a time. This cuts the time in half necessary to carry out the bleeding of a complete braking system with more than one brake circuit compared to the bleeding methods known in the art.

To ensure the complete removal of air bubbles from the braking system and to be still efficient the steps of starting and stopping the hydraulic pump and the steps of opening and closing the valve(s) are carried out for a predetermined period of time. According to the present invention this period of time is preferably about 20 seconds.

According to yet another preferred embodiment of the present invention a step of waiting for a predetermined time is carried out after the last step of closing the bleeder screw, preferably approximately 120 seconds of time. This ensures that there is enough time for the ESC system, particularly the pump and the valves, to cool down which is especially important if another bleeding process is to be started, for example, to bleed another brake circuit.

Preferably the method of bleeding a hydraulic braking system according to the present invention is used to bleed the braking system of a vehicle, wherein the braking system consists of at least two different and independent brake circuits.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best modes contemplated for carrying out this invention, but that the invention will include all embodiments falling within the scope of the claims.

## Claims

1. A method of bleeding a hydraulic braking system of a vehicle comprising an electronic stability control (ESC) system, and comprising at least a hydraulic pump which, at its suction side, is in fluid conducting communication with a brake fluid reservoir and, at its pressure side, is in fluid conducting communication with at least a brake cylinder, wherein at least a valve for opening and closing the fluid conducting communication is provided between the hydraulic pump and each brake cylinder, including at least the following steps:
- providing brake fluid to the brake fluid reservoir while carrying out all subsequent steps,
- opening a bleeder screw on at least one brake cylinder,
- starting the hydraulic pump,
- opening and closing of at least a valve,
- stopping the hydraulic pump, and
- closing the bleeder screw, **characterized in that** the steps of starting and stopping said hydraulic pump and the steps of opening and closing said valve(s) are carried out by said electronic stability control system, such that fresh brake fluid from said brake fluid reservoir is drawn out of said open bleeder screw at said brake cylinder.

2. The method according to claim 1, wherein the brake fluid in the brake fluid reservoir is pressurized with a pressure preferably in the range of approximately 1 bar to approximately 2 bar of pressure.

3. The method according to claim 1 or 2, wherein the steps of starting and stopping the hydraulic pump and the steps of opening and closing the valve(s) are automatically initiated by means of a diagnostic program.

4. The method according to any one of the preceding claims, wherein the steps of opening and closing the valve(s) comprise sequentially opening and closing all valves of the braking system.

5. The method according to any one of claims 1 to 3, wherein the steps of opening and closing the valve(s) comprise opening and closing all valves of the braking system at the same time.

6. The method according to any one of the preceding claims, wherein the steps of opening and closing the valve(s) are carried out multiple times in rapid succession.

7. The method according to any one of the preceding claims, wherein the hydraulic braking system comprises at least two brake cylinders which are associated with two different brake circuits of the braking system and the steps of opening and closing the bleeder screw comprise opening and closing the bleeder screw on the two brake cylinders associated with two different brake circuits at a time.

8. The method according to any one of the preceding claims, wherein the steps of starting and stopping the hydraulic pump and the steps of opening and closing the valve(s) are carried out for a predetermined period of time, preferably for approximately 20 seconds.

9. The method according to any one of the preceding claims, wherein a step of waiting for a predetermined time is carried out after the last step of closing the bleeder screw, preferably approximately 120 seconds of time.

## Patentansprüche

1. Verfahren zum Entlüften eines hydraulischen Bremssystems eines Fahrzeugs, das ein elektronisches Stabilitätskontrollsystem (ESC-System) umfasst, und
mindestens eine hydraulische Pumpe umfasst, die an ihrer Saugseite in einem flüssigkeitsführenden Austausch mit einem Bremsflüssigkeitsbehälter steht und an ihrer Druckseite in einem flüssigkeitsführenden Austausch mit mindestens einem Bremszylinder steht, wobei zwischen der hydraulischen Pumpe und jedem Bremszylinder mindestens ein Ventil zum Öffnen und Schließen des flüssigkeitsführenden Austauschs bereitgestellt ist, einschließlich mindestens der folgenden Schritte:
- Bereitstellen von Bremsflüssigkeit für den Bremsflüssigkeitsbehälter, während alle nachfolgenden Schritte ausgeführt werden,
- Öffnen einer Entlüftungsschraube an mindestens einem Bremszylinder,
- Starten der hydraulischen Pumpe,
- Öffnen und Schließen mindestens eines Ventils,
- Anhalten der hydraulischen Pumpe, und
- Schließen der Entlüftungsschraube,
**dadurch gekennzeichnet, dass** die Schritte des Startens und Anhalten der hydraulischen Pumpe und die Schritte des Öffnens und Schließens des Ventils/der Ventile von dem elektronischen Stabilitätskontrollsystem ausgeführt werden, sodass aus der offenen Entlüftungsschraube an dem Bremszylinder frische Bremsflüssigkeit aus dem Bremsflüssigkeitsbehälter abgezogen wird.

2. Verfahren nach Anspruch 1, wobei die Bremsflüssigkeit in dem Bremsflüssigkeitsbehälter mit einem Druck vorzugsweise im Bereich von annähernd 1 bar bis annähernd 2 bar beaufschlagt ist.

3. Verfahren nach Anspruch 1 oder 2, wobei die Schritte des Startens und Anhaltens der hydraulischen Pumpe und die Schritte des Öffnens und Schließens des Ventils/der Ventile durch ein Diagnoseprogramm automatisch ausgelöst werden.

4. Verfahren nach einem der vorangehenden Ansprüche, wobei die Schritte des Öffnens und Schließens des Ventils/der Ventile ein aufeinanderfolgendes Öffnen und Schließen aller Ventile des Bremssystems umfassen.

5. Verfahren nach einem der Ansprüche 1 bis 3, wobei die Schritte des Öffnens und Schließens des Ventils/der Ventile ein Öffnen und Schließen aller Ventile des Bremssystems zur gleichen Zeit umfassen.

6. Verfahren nach einem der vorangehenden Ansprüche, wobei die Schritte des Öffnen und Schließens des Ventils/der Ventile in schneller Folge mehrfach ausgeführt werden.

7. Verfahren nach einem der vorangehenden Ansprüche, wobei das hydraulische Bremssystem mindestens zwei Bremszylinder umfasst, die zwei verschiedenen Bremskreisen des Bremssystems zugeordnet sind, und die Schritte des Öffnens und Schließens der Entlüftungsschraube ein gleichzeitiges Öffnen und Schließen der Entlüftungsschraube an den zwei Bremszylindern, die zwei verschiedenen Bremskreisen zugeordnet sind, umfassen.

8. Verfahren nach einem der vorangehenden Ansprüche, wobei die Schritte des Startens und Anhaltens der hydraulischen Pumpe und die Schritte des Öffnens und Schließens des Ventils/der Ventile für einen vorbestimmten Zeitraum ausgeführt werden, vorzugsweise für etwa 20 Sekunden.

9. Verfahren nach einem der vorangehenden Ansprüche, wobei ein Schritt des Wartens für einen vorbestimmten Zeitraum nach dem letzten Schritt des Schließens der Entlüftungsschraube, vorzugsweise nach einem Zeitraum von etwa 120 Sekunden, ausgeführt wird.

## Revendications

1. Procédé de purge du système de freinage hydraulique d'un véhicule comprenant un système électro-stabilisateur programmé (ESP), et
comprenant au moins une pompe hydraulique qui, du côté de son aspiration, est en communication fluidique de conduite avec un réservoir à liquide de frein et, du côté de son refoulement, est en communication fluidique de conduite avec au moins un cylindre de frein,
dans lequel au moins un clapet pour ouvrir et fermer la communication fluidique de conduite est disposé entre la pompe hydraulique et chaque cylindre de frein, comprenant au moins les étapes suivantes :
- fournir du liquide de frein au réservoir à liquide de frein tout en effectuant toutes les étapes suivantes ;
- ouvrir une vis de purge sur au moins un cylindre de frein ;
- démarrer la pompe hydraulique ;
- ouvrir et fermer au moins un clapet ;
- arrêter la pompe hydraulique ; et
- fermer la vis de purge,
**caractérisé en ce que** les étapes de démarrage et d'arrêt de ladite pompe hydraulique et les étapes d'ouverture et de fermeture dudit ou des dits clapets sont effectuées par ledit système électro-stabilisateur programmé, de telle sorte que du liquide de frein renouvelé provenant dudit réservoir à liquide de frein est sorti de ladite vis de purge ouverte au niveau dudit cylindre de frein.

2. Procédé selon la revendication 1, dans lequel le liquide de frein dans le réservoir à liquide de frein est mis sous pression avec une pression de préférence dans la plage allant d'environ 1 bar à environ 2 bar de pression.

3. Procédé selon la revendication 1 ou 2, dans lequel les étapes de démarrage et d'arrêt de ladite pompe hydraulique et les étapes d'ouverture et de fermeture le ou les clapets sont amorcées au moyen d'un programme de diagnostic.

4. Procédé selon l'une quelconque des revendications précédentes, dans lequel les étapes d'ouverture et de fermeture du ou des clapets comprennent l'ouverture et la fermeture de tous les clapets du système de freinage l'un après l'autre.

5. Procédé selon l'une quelconque des revendications 1 à 3, dans lequel les étapes d'ouverture et de fermeture du ou des clapets comprennent l'ouverture et la fermeture de tous les clapets du système de freinage en même temps.

6. Procédé selon l'une quelconque des revendications précédentes, dans lequel les étapes d'ouverture et de fermeture du ou des clapets sont effectuées plusieurs fois en succession rapide.

7. Procédé selon l'une quelconque des revendications précédentes, dans lequel le système de freinage hydraulique comprend au moins deux cylindres de frein qui sont associés à deux circuits de frein différents du système de freinage et les étapes d'ouverture et de fermeture de la vis de purge comprennent l'ouverture et la fermeture de la vis de purge à la fois sur les deux cylindres de frein associés aux deux circuits de frein différents.

8. Procédé selon l'une quelconque des revendications précédentes, dans lequel les étapes de démarrage et d'arrêt de ladite pompe hydraulique et les étapes d'ouverture et de fermeture le ou les clapets sont effectuées pendant une période prédéterminée, de préférence pendant à peu près 20 secondes.

9. Procédé selon l'une quelconque des revendications précédentes, dans lequel on effectue une étape d'attente pendant une durée prédéterminée après la dernière étape de fermeture de la vis de purge, de préférence une durée d'à peu près 120 secondes.
